Europäisches Patentamt

European Patent Office

Office européen des brevets

(11) Veröffentlichungsnummer: **0 273 232**

**A2**

## EUROPÄISCHE PATENTANMELDUNG

(21) Anmeldenummer: **87117941.2**

(22) Anmeldetag: **04.12.87**

(51) Int. Cl.⁴: **F01N 3/28**

(30) Priorität: **20.12.86 DE 3643785**

(43) Veröffentlichungstag der Anmeldung:
**06.07.88 Patentblatt 88/27**

(84) Benannte Vertragsstaaten:
**DE ES FR GB IT SE**

(71) Anmelder: **Adam Opel Aktiengesellschaft**
**Bahnhofsplatz 1 Postfach 17 10**
**D-6090 Rüsselsheim(DE)**

(84) **DE ES FR GB IT SE**

(71) Anmelder: **General Motors Espana, S.A.**
**Poligono Entrerrios**
**Figueruelas (Zaragoza)(ES)**

(84) **ES**

(72) Erfinder: **Martin, Hans-Werner**
**Heinrich-Heine-Strasse 12**
**D-6090 Rüsselsheim(DE)**
Erfinder: **Rühl, Werner-Jürgen, Dr.-Ing.**
**Dieburger Strasse 38**
**D-6070 Langen(DE)**
Erfinder: **Köhler, Andrea, Dipl.-Ing.**
**Balduinstrasse 63**
**D-6000 Frankfurt(DE)**

(74) Vertreter: **Elbert, Karl, Dipl.-Ing.**
**Adam Opel AG Patentabteilung**
**Bahnhofsplatz 1 Postfach 1560**
**D-6090 Rüsselsheim(DE)**

(54) **Verfahren zum Entgiften von Verbrennungsmotor-Abgasen und Abgaskatalysator-Vorrichtung.**

(57) Eine Abgaskatalysatorvorrichtung besitzt einen Einlaß und Auslaßstutzen (14, 15) aufweisenden Rohrbehälter (16), in dem durch eine Dichtungs-und Isoliermaterialschicht (17) von der Behälterwand getrennt ein den ganzen Rohrbehälterquerschnitt einnehmender Abgaskatalysator angeordnet ist. Im Abgaseintrittsbereich weist der Abgaskatalysator (12) eine Katalysatorgift-Abscheidezone (11) auf. Hierdurch wird die Lebensdauer bei verringertem Edelmetalleinsatz verlängert.

FIG. 1

## Verfahren zum Entgiften von Verbrennungsmotor-Abgasen und Abgaskatalysator-Vorrichtung

Die Erfindung betrifft ein Verfahren zum Entgiften von Verbrennungsmotor-Abgasen, bei dem die Abgase durch einen Abgaskatalysator hindurch geleitet werden, der gleichmäßig mit bestimmten Edelmetallen, wie z.B. Platin bzw. Rhodium, beschichtete Pellets oder Monolithe enthält.

Weiter bezieht sich die Erfindung auf eine Abgaskatalysatorvorrichtung mit einem Einlaßstutzen und einen Auslaßstutzen aufweisenden Rohrbehälter, in dem vorzugsweise durch eine Dichtungs-und Isoliermaterialschicht von der Behälterwand getrennt ein den ganzen Rohrbehälterquerschnitt einnehmender Abgaskatalysator angeordnet ist, der gleichmäßig mit bestimmten Edelmetallen, wie Platin oder Rhodium, beschichtete Pellets oder Monolithe enthält.

Abgaskatalysatorvorrichtungen werden heute zunehmend im Automobilbau verwendet, um die Verbrennungsmotorabgase vor dem Austreten in die Atmosphäre zu entgiften, d.h. insbesondere von Kohlenwasserstoffen, Kohlenmonoxid und Stickoxiden weitgehend zu befreien. Die hierbei verwendeten Abgaskatalysatoren sind jedoch ihrerseits empfindlich gegen die Vergiftung durch in den Verbrennungsmotor abgasen vorhandene Katalysatorgifte, wie Blei, Phosphor und/oder Schwefel. Das gefährlichste Katalysatorgift ist dabei das Blei. Aufgrund der mit der Laufzeit zunehmenden Katalystorvergiftung ist die Lebensdauer des Abgaskatalysators begrenzt. Man kann dem zwar etwas entgegenwirken, indem man die Pelletschüttungen oder Monolithe mit einem Edelmetallüberschuß versieht; dadurch aber wird der Abgaskatalysator verteuert, und es wird Edelmetall, welches zur Abgasentgiftung eigentlich gar nicht erforderlich wäre, vergeudet.

Das Ziel der Erfindung besteht darin, die Lebensdauer des Abgaskatalysators entscheidend zu verlängern, ohne über die für die eigentliche Abgasentgiftung erforderlichen Edelmetallmengen hinausgehendes Edelmetall in den Abgaskatalysator einbringen zu müssen.

Eine erste Lösung dieser Aufgabe kennzeichnet sich erfindungsgemäß dadurch, daß die Abgase vor dem Inkontakttreten mit den Edelmetallen zunächst durch eine von den bestimmten Edelmetallen freie Katalysatorgift-Abscheidezone geleitet werden.

Nach einer zweiten Lösung ist vorgesehen, daß die Abgase nach dem Abschluß einer ersten Betriebsphase, an deren Ende die Eintrittsbereiche des Abgaskatalysators durch Katalysatorgifte in ihrer Wirksamkeit stark beeinträchtigt sind, während einer zweiten Betriebsphase in entgegengesetzter Richtung durch den Abgaskatalysator hindurchgeleitet werden. Besonders bevorzugt ist die gemeinsame Anwendung der beiden vorgenannten Lösungen, was in der Weise erfolgen kann, daß die Abgase vor dem Inkontakttreten mit den Edelmetallen zunächst durch eine von den bestimmten Edelmetallen freie Katalysatorgift-Abscheidezone geleitet werden, daß die Abgase nach dem Abschluß einer ersten Betriebsphase, an deren Ende die Katalysatorgift-Abscheidezone mit Katalysatorgift zumindest annähernd gesättigt ist, während einer zweiten Betriebsphase in entgegengesetzter Richtung durch den Abgaskatalysator hindurchgeleitet werden. Hierbei ist es besonders bevorzugt, wenn die Abgase auch während der zweiten Betriebsphase vor dem Inkontakttreten mit den Edelmetallen zunächst durch eine von den bestimmten Edelmetallen freie Katalysatorgift-Abscheidezone geleitet werden.

Der Erfindungsgedanke ist also darin zu sehen, daß man entweder am Eintritt des Abgaskatalysators einen zwar mit Pellets oder Monolithen ausgefüllten Bereich vorsieht, der jedoch von Edelmetallen frei ist, so daß dort zunächst die Niederschlagung der Abgaskatalysatorgifte erfolgt. In den anschließenden Bereichen des Abgaskatalysators kann dann weitgehend ungestört durch Katalysatorgift die Abgasentgiftung erfolgen. Diese Lösung erfordert keinen Überschuß an Edelmetallen, sondern spart aufgrund des edelmetallfreien Anfangsbereiches Edelmetalle eher ein.

Bei der zweiten Lösung wird ebenfalls ohne Edelmetallüberschuß gearbeitet. Gleichwohl wird die Lebensdauer des Abgaskatalysators annähernd verdoppelt, indem er in zwei aufeinanderfolgenden Betriebsphasen in umgekehrter Richtung vom Abgas durchströmt wird. Auf diese Weise werden die im Austrittsbereich des Abgaskatalysators vorhandenen, nach Abschluß der ersten Betriebsphase noch weitgehend unvergifteten Katalysatorbereiche in der zweiten Betriebsphase für die Abgasreinigung in optimaler Weise genutzt.

Ein minimaler Aufwand an Edelmetall verbunden mit einer maximalen Lebensdauer wird durch die gemeinsame Anwendung der vorgenannten Lösungen erzielt.

Die Erfindung betrifft weiter eine Abgaskatalysatorvorrichtung der eingangs genannten Gattung, welche sich erfindungsgemäß dadurch kennzeichnet, daß im Abgaseintrittsbereich des Abgaskatalysators eine Katalysatorgift-Abscheidezone vorgesehen ist, innerhalb der die Pellets bzw. der Monolith nicht mit den bestimmten Edelmetallen beschichtet ist. Zweckmäßigerweise wird die Katalysatorgift-Abscheidezone zusätzlich zu der mit Edelmetallen beschichteten Zone vorgesehen, so daß für das von Katalysatorgiften weitgehend befreite Abgas das für die Abgasentgiftung volle Katalysatorvolumen zur Verfügung steht.

Der Einbau der Abgaskatalysatorvorrichtung der eingangs genannten ·Gattung auch in umgekehrter ·Richtung wird dadurch erleichtert, daß der Rohrbehälter in bezug auf seine Mittelquerebene symmetrisch ausgebildet ist, derart, daß er auch umgekehrt in die Abgasleitung einbaubar ist. Auch bei dieser Lösung ist es zweckmäßig, daß auch im Abgasaustrittsbereich des Abgaskatalysators eine Katalysatorgift-Abscheidezone ·vorgesehen ist, innerhalb der die Pellets bzw. der Monolith nicht mit den bestimmten Edelmetallen beschichtet sind, derart, daß auch bei umgekehrtem Einbau des Abgaskatalysators die Abgase zunächst durch eine edelmetallfreie Katalysatorgift-Abscheidezone strömen.

Die Erfindung wird im folgenden beispielsweise anhand der Zeichnung beschrieben; in dieser zeigt:

Fig. 1 einen schematischen Schnitt durch eine Abgaskatalysatorvorrichtung gemäß der ersten erfindungsgemäßen Lösung, die

Fig. 2a und 2b schematische Querschnitte durch einen in eine Abgasleitung 19 eingebaute Abgaskatalysatorvorrichtung mit symmetrischem Aufbau und in zwei unterschiedlichen Einbaulagen und die

Fig. 3a und 3b zwei schematische Schnittansichten analog den Fig. 2a, 2b, wobei jedoch beide Enden des Abgaskatalysators gemäß Fig. 1 gestaltet sind.

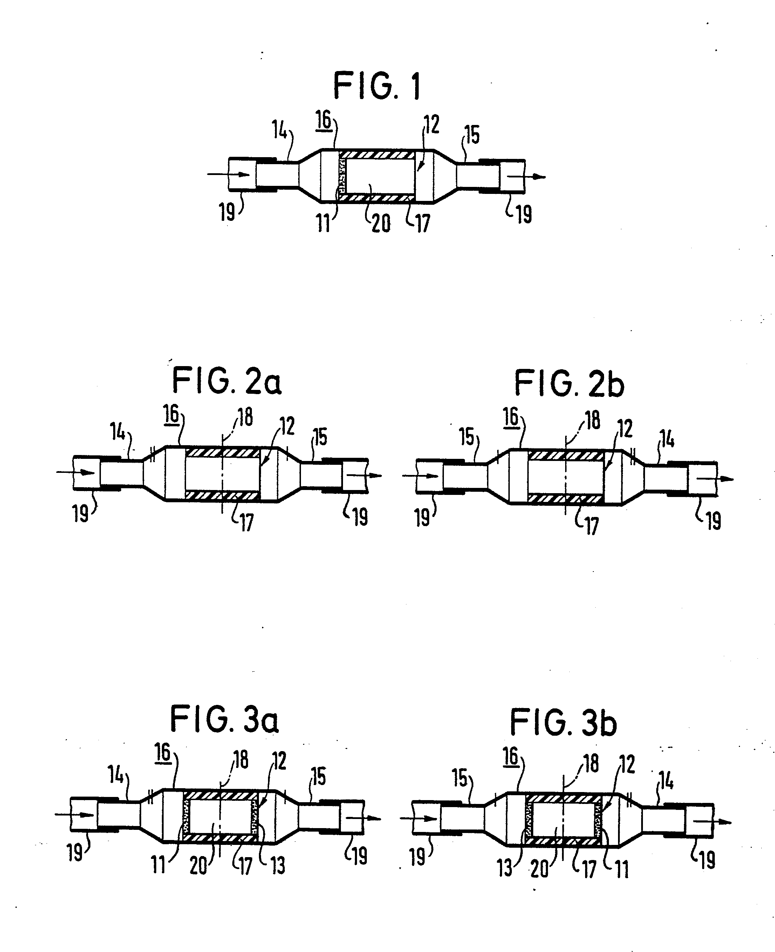

Nach Fig. 1 ist in eine Abgasleitung 19 eine Abgaskatalysatorvorrichtung eingebaut, welche einen kreiszylindrischen Rohrbehälter 16 aufweist, der an seinen beiden Enden in kreiszylindrische und einen geringeren Durchmesser aufweisende Einlaß- bzw. Auslaßstutzen 14 bzw. 15 übergeht, die an die Abgasleitung 19 in geeigneter Weise dicht angeschlossen sind. Der Abgasstrom ist durch Pfeile angedeutet.

Im Inneren des Rohrbehälters 16 befindet sich von einer Dichtungs- und Isoliermaterialschicht 17 von der Rohrbehälterwand getrennt ein im wesentlichen kreiszylindrischer Abgaskatalysator 12, der durch eine Pelletfüllung oder einen hochporösen Monolithen gebildet sein kann. Die Pellets bzw. der Monolith sind im größten Bereich 20 des Abgaskatalysators 12 mit bestimmten Edelmetallen, wie z.B. Platin bzw. Rhodium, beschichtet, welche die Eigenschaft haben, die Verbrennungsmotorabgase katalytisch zu entgiften.

Im Eintrittsbereich des Abgaskatalysators 12 befindet sich eine schmale Katalysatorgift-Abscheidezone 11, welche ebenfalls durch die Pellets der Pelletschüttung bzw. den Eingangsbereich des Monolithen gebildet ist, wobei jedoch in diesem Bereich keine Edelmetallbeschichtung vorliegt.

Durch den Verzicht auf die Edelmetallbeschichtung in der Katalysatorgift-Abscheidezone 11 wird Edelmetall eingespart. Gleichwohl werden dort die Katalysatorgifte weitgehend abgeschieden, so daß sie die im Hauptbereich 20 des Abgaskatalysators 12 befindlichen Edelmetalle nicht mehr vergiften können. Irgendwelche konstruktiven Änderungen sind bei der Lösung nach Fig. 1 nicht erforderlich; es muß lediglich durch geeignete Verfahren darauf geachtet werden, daß in der Katalysatorgift-Abscheidezone 11 keine Edelmetalle abgelagert werden.

Bei der zweiten Lösung nach Fig. 2a und 2b wird dafür gesorgt, daß der Rohrbehälter 16 mit dem Einlaßstutzen 14 und dem Auslaßstutzen 15 symmetrisch zur Mittelquerebene 18 ausgebildet ist. Während einer ersten Betriebsphase wird die Abgaskatalysatorvorrichtung gemäß Fig. 2a in die Abgasleitung 19 eingebaut. Der vordere Bereich der Katalysatorvorrichtung ist durch zwei vertikale Striche, der hintere Bereich durch einen vertikalen Strich gekennzeichnet. Die Bezugszahlen bezeichnen gleiche Teile wie in Fig. 1.

Am Ende einer ersten Betriebsphase ist zwar der Eingangsbereich des Abgaskatalysators 12 durch Katalysatorgifte kontaminiert. Der Austrittsbereich ist jedoch noch weitgehend unvergiftet.

Aus diesem Grunde wird am Ende der ersten Betriebsphase, die z.B. 50.000 bis 70.000 km betragen kann, die Abgaskatalysatorvorrichtung gemäß Fig. 2b in entgegengesetzter Richtung in die Abgasleitung 19 eingebaut.

Nunmehr strömt das Verbrennungsmotorabgas zunächst durch die noch weitgehend unvergifteten Bereiche des Abgaskatalysators 12, wodurch dessen Wirksamkeit erheblich ge steigert wird. Zusätzlich wird ein großer Teil des anfangs abgeschiedenen Bleis nach der Umkehr vom Abgasstrom ausgeschieden.

Während bei dem Ausführungsbeispiel nach den Fig. 2a und 2b der Abgaskatalysator 12 durchgehend mit Edelmetallen beschichtet ist, also auch in den Eintrittsbereichen, ist bei der optimierten Lösung nach den Fig. 3a und 3b vorgesehen, daß sowohl im Eintritts- als auch im Austrittsbereich des Abgaskatalysators 12 jeweils eine Katalysatorgift-Abscheidezone 11 bzw. 13 vorgesehen ist, innerhalb der der Monolith bzw. die Pellets nicht mit Edelmetallen beschichtet sind.

Auch in den Fig. 3a und 3b bezeichnen gleiche Bezugszahlen entsprechende Bauteile wie in den vorangehenden Figuren.

In der ersten Betriebsphase steht zunächst die Katalysatorgift-Abscheidezone 11 für die Abscheidung von Katalysatorgiften zur Verfügung. In den Hauptbereich 20 des Abgaskatalysators, in welchen die Pellets oder der Monolith mit Edelmetallen beschichtet sind, kann so eine besonders wirksame Abgasentgiftung erfolgen.

Sobald die Katalysatorgift-Abscheidezone 11 durch Katalysatorgifte weitgehend kontaminiert ist, wird der wieder symmetrisch zur Mittelquerbene 18 ausgebildete Abgaskatalysator gemäß Fig. 3b umgekehrt eingebaut, worauf die noch weitgehend unvergiftete zweite Katalysatorgift-Abscheidezone 13 dem eintretenden Abgas ausgesetzt wird. Es folgt jetzt eine zweite Betriebsphase der Abgaskatalysatorvorrichtung, während der die Vorrichtung annähernd so effektiv arbeitet wie während der ersten Betriebsphase.

Bei einem Abgaskatalysator mit einem Doppelmonolithen, d.h. mit zwei hintereinander geschalteten Monolithen kann bei entsprechender Anpassung des zweiten Monolithen der erste Monolith als Vorfilter ohne Beschichtung mit Edelmetallen ausgebildet oder mit Beschichtung auf ca. 1/3 der ursprünglichen Länge verkürzt werden. Der nachgeschaltete Monolith wird auf seiner gesamten Länge beschichtet belassen. Der vorgeschaltete Monolith wird dabei hauptsächlich mit Katalysatorgiften kontaminiert. Durch eine Konstruktion mit herausnehmbaren, d.h. auswechselbaren, vorgeschalteten Monolithen wird es möglich, eventuell auch mit verbleitem Kraftstoff zu fahren. Der nachgeschaltete Monolith kann wegen der geringen Belastung im Fahrzeug verbleiben.

## Ansprüche

1. Verfahren zum Entgiften von Verbrennungsmotor-Abgasen, bei dem die Abgase durch einen Abgaskatalysator hindurch geleitet werden, der gleichmäßig mit bestimmten Edelmetallen, wie z.B. Platin bzw. Rhodium, beschichtete Pellets oder Monolithe enthält, dadurch **gekennzeichnet,** daß die Abgase vor dem Inkontakttreten mit den Edelmetallen zunächst durch eine von den bestimmten Edelmetallen freie Katalysatorgift-Abscheidezone (11) geleitet werden.

2. Verfahren zum Entgiften von Verbrennungsmotor-Abgasen, bei dem die Abgase durch einen Abgaskatalysator hindurch geleitet werden, der gleichmäßig mit bestimmten Edelmetallen, wie z.B. Platin bzw. Rhodium, beschichtete Pellets oder Monolithe enthält, dadurch **gekennzeichnet,** daß die Abgase nach dem Abschluß einer ersten Betriebsphase, an deren Ende die Eintrittsbereiche des Abgaskatalysators (12) durch Katalysatorgifte in ihrer Wirksamkeit stark beeinträchtigt sind, während einer zweiten Betriebsphase in entgegengesetzter Richtung durch den Abgaskatalysator (12) hindurchgeleitet werden.

3. Verfahren zum Entgiften von Verbrennungsmotor-Abgasen, bei dem die Abgase durch einen Abgaskatalysator hindurch geleitet werden, der gleichmäßig mit bestimmten Edelmetallen, wie z.B. Platin bzw. Rhodium, beschichtete Pellets oder Monolithe enthält, dadurch **gekennzeichnet,** daß die Abgase vor dem Inkontakttreten mit den Edelmetallen zunächst durch eine von den bestimmten Edelmetallen freie Katalysatorgift-Abscheidezone (11) geleitet werden, daß die Abgase nach dem Abschluß einer ersten Betriebsphase, an deren Ende die Katalysatorgift-Abscheidezone (11) mit Katalysatorgiften zumindest annähernd gesättigt ist, während einer zweiten Betriebsphase in entgegengesetzter Richtung durch den Abgaskatalysator (12) hindurchgeleitet werden.

4. Verfahren nach Anspruch 3, dadurch **gekennzeichnet,** daß die Abgase auch während der zweiten Betriebsphase vor dem Inkontakttreten mit den Edelmetallen zunächst durch eine von den bestimmten Edelmetallen freie Katalysatorgift-Abscheidezone (13) geleitet werden.

5. Abgaskatalysatorvorrichtung mit einem einen Einlaßstutzen und einen Auslaßstutzen aufweisenden Rohrbehälter, in dem vorzugsweise durch eine Dichtungs-und Isoliermaterialschicht von der Behälterwand getrennt ein den ganzen Rohrbehälterquerschnitt einnehmender Abgaskatalysator angeordnet ist, der gleichmäßig mit bestimmten Edelmetallen, wie z.B. Platin bzw. Rhodium, beschichtete Pellets oder Monolithe enthält, dadurch **gekennzeichnet,** daß im Abgaseintrittsbereich des Abgaskatalysators (12) eine Katalysatorgift-Abscheidezone (11) vorgesehen ist, innerhalb der die Pellets bzw. der Monolith nicht mit den bestimmten Edelmetallen beschichtet ist.

6. Abgaskatalysatorvorrichtung mit einem einen Einlaßstutzen und einen Auslaßstutzen aufweisenden Rohrbehälter, in dem vorzugsweise durch eine Dichtungs-und Isoliermaterialschicht von der Behälterwand getrennt ein den ganzen Rohrbehälterquerschnitt einnehmender Abgaskatalysator angeordnet ist, der gleichmäßig mit bestimmten Edelmetallen, wie z.B. Platin bzw. Rhodium, beschichtet Pellets oder Monolithe enthält, dadurch **gekennzeichnet,** daß der Rohrbehälter in zwei entgegengesetzten Richtungen in die Abtastleitung einbaubar ist oder daß der Abgaskatalysator in zwei entgegengesetzten Richtungen in den Rohrbehälter einbaubar ist.

7. Abgaskatalysator nach Anspruch 6, dadurch **gekennzeichnet,** daß der Rohrbehälter (16) in bezug auf seine Mittelquerebene (18) symmetrisch ausgebildet ist.

8. Abgaskatalysatorvorrichtung nach Anspruch 6 und 7, dadurch **gekennzeichnet,** daß auch im Abgasaustrittsbereich des Abgaskatalysators (12) eine Katalysatorgift-Abscheidezone (13) vorgesehen ist, innerhalb der die Pellets bzw. der Monolith nicht mit den bestimmten Edelmetallen beschichtet sind, derart, daß auch bei umgekehrtem Einbau des Abgaskatalysators (12) die Abgase zunächst durch eine edelmetallfreie Katalysatorgift-Abscheidezone (13) strömen.

9. Abgaskatalysator nach einem oder mehreren der vorhergehenden Ansprüche mit zwei hintereinander geschalteten Monolithen,
dadurch **gekennzeichnet,** daß der vorgeschaltete Monolith unbeschichtet und/oder austauschbar ausgebildet ist.

# FIG. 1

# FIG. 2a

# FIG. 2b

# FIG. 3a

# FIG. 3b